# EUROPEAN PATENT SPECIFICATION

(11) **EP 1 900 112 B1**
(45) Date of publication and mention of the grant of the patent: **14.02.2018**
(21) Application number: 05756933.7
(22) Date of filing: 04.07.2005
(51) Int. Cl.: H04B 7/14, H04B 7/24, H04B 10/00, H04B 7/10, H04B 7/04, H04W 16/28, H04B 7/155, H04B 7/0408

(54) **A POINT-TO-POINT TELECOMMUNICATIONS SYSTEM**
PUNKT-ZU-PUNKT-TELEKOMMUNIKATIONSSYSTEM
SYSTÈME DE TÉLÉCOMMUNICATIONS POINT À POINT

(43) Date of publication of application: 19.03.2008
(73) Proprietor: Telefonaktiebolaget LM Ericsson (publ), 164 83 Stockholm (SE)
(72) Inventor: ANDERSSON, Mats, S-417 19 Göteborg (SE)
(74) Representative: Ericsson
(86) International application number: PCT/SE2005/001082
(87) International publication number: WO 2007/004931

(56) References cited:
- US-A1- 2002 164 946
- US-A1- 2003 124 976
- US-A1- 2005 059 342
- US-A1- 2005 059 342

## Description

### TECHNICAL FIELD

The present invention discloses a point-to-point telecommunications system with a first transmitter which transmits information to a first receiver via electromagnetic waves. The transmitter transmits on a number of antenna beams, using a first frequency on at least a first and a second of said beams, with said first and second beams containing different information.

### BACKGROUND ART

In wireless telecommunications systems such as, for example, cellular telephony systems, there is often a need to transmit information from, for example, a base station, to a higher level in the system. With increases in the information transmission capacity within a cell, there will also be demands for significant increases in the capacity to transmit information from a base station to higher levels in the system.

A traditional method of relaying information from the base station to higher levels in the system has been to use radio links, usually in the microwave frequency range, for point-to-point transmission. Conventional methods of increasing the capacity in a radio link have been to use higher order modulation methods, and/or the use of dual orthogonal polarizations for transmitting independent signals.

Higher order modulation and dual polarization systems are expensive, sensitive to interference and will normally not allow more than a fourfold increase in capacity compared to the standard solutions used today over a fixed bandwidth, such as, for example, a channel with 28 MHz bandwidth.

A desired capacity might be in the region of 1 GBps or more, which, using contemporary solutions, would involve several 28 MHz bandwidth channels.

This would in turn lead to a need for more frequency spectrum, which in many cases is not possible, since frequency spectrum is a limited resource, and in many situations the operator can not get more spectrum from the frequency authority.

US 2005/0059342 describes a system for cellular wireless communication comprising a repeater having one or more directional antennas, wherein signal communication can be made between one directional antenna of the repeater and a base station and signal communication can be made between the same one directional antenna of the repeater with at least one remote terminal. Alternatively, the system comprises at least one repeater having at least one transmitter and at least one receiver, wherein the at least one repeater is adapted to substantially simultaneously communicate signals with each of a plurality of remote terminals using a same frequency.

### DISCLOSURE OF THE INVENTION

There is thus a need for a solution or a system which would allow higher capacity transmissions than with contemporary solutions in a point-to-point telecommunications system.

This need is addressed by the present invention in that it discloses a point-to-point telecommunications system which comprises a first transmitter which transmits information to a first receiver via electromagnetic waves. Said first transmitter transmits on a number of antenna beams using a first frequency on at least a first and a second of said beams. Said first and second beams contain different information, and the point-to-point connection between the transmitter and the receiver is achieved by means of at least a first repeater located between the transmitter and the receiver, with the first repeater being used for the first beam.

In another embodiment of the invention, the system can in addition comprise a second repeater, which is used for connecting the first transmitter to the first receiver in the second beam.

Thus, by means of the invention, the transmission capacity can be increased by using a plurality of different antenna beams, all on one and the same frequency, but containing different information, while not requiring more frequency spectrum than one beam.

In addition, so called MIMO equipment can be applied to the proposed system. MIMO, Multiple Input Multiple Output, is usually only used in other types of systems and applications, mainly so called NLOS-systems, Non Line Of Sight systems.

The frequencies of the electromagnetic waves used are in a preferred embodiment on the microwave band, but other wavelengths are also possible, including, for example, optical wavelengths.

### BRIEF DESCRIPTION OF THE DRAWINGS

The invention will be described in more detail in the following description with reference to the appended drawings, in which
Fig 1 shows an example of a known communications system, and
Fig 2 shows a schematic diagram of a system according to the invention, and
Fig 3 shows a transmitter for use in a system according to the invention. and
Fig 4 shows a transmit station for use in a system of the invention

### EMBODIMENTS OF THE INVENTION

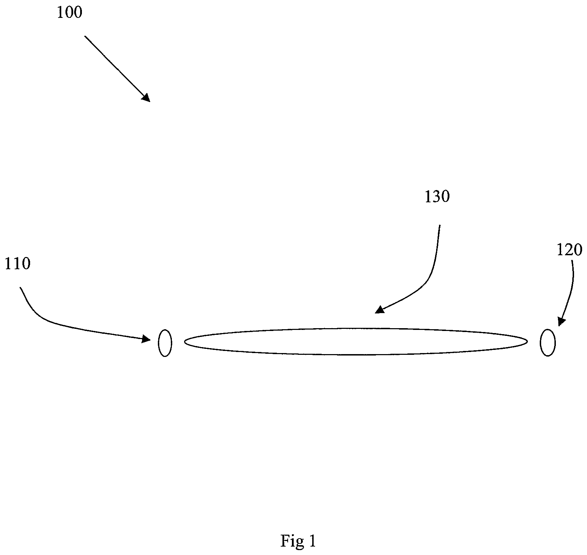

Fig 1 shows a traditional wireless point-to-point telecommunications system 100. It can be pointed out here that the term "point-to-point" refers to a system in which one transmitter 110 communicates with one corresponding receiver 120, as shown in fig 1.

Naturally, there is nothing to stop a point-to point system such as the one in fig 1 from comprising a second transmitter, usually co-located with the first receiver 120, which would then communicate with a second receiver, usually co-located with the first transmitter 110. In such a system, each of the units 110, 120, shown in fig 1 would then comprise a transmitter and a receiver. The units 110, 120 communicate via electromagnetic waves, usually in the microwave range, i.e. frequencies from 1 GHz up to 60 GHz, but other wavelengths can also be imagined, including optical frequencies.

As is also shown in fig 1, the two units 110, 120, communicate with each other in one main beam 130. A typical bandwidth which can be used by the system in fig 1 is 28 MHz, which, with conventional modulation methods, will allow a transmission rate of 155 Mb/s.

A major application for the system shown in fig 1, as well as for the invention, is to connect radio base stations in cellular telephony systems to higher levels in the telephony system. In future systems, transmission rates which are much higher will be needed, thus posing a problem for the system shown in fig 1. Examples of transmission rates which will be needed in future systems are up to and over 1 Gbps (Gigabit per second).

In order to achieve an increase in transmission rates while still using essentially the same modulation methods, the system of the invention makes use of a transmission antenna which can transmit in a plurality of beams, i.e. at least a first and a second beam. The same transmission frequency can be used in both or all of the beams, due to the fact that the beams will be given an angular separation which will accomplish a sufficiently low level of correlation/interference between the beams. The angular separation can be in either azimuth or elevation, or a combination which gives the desired effect

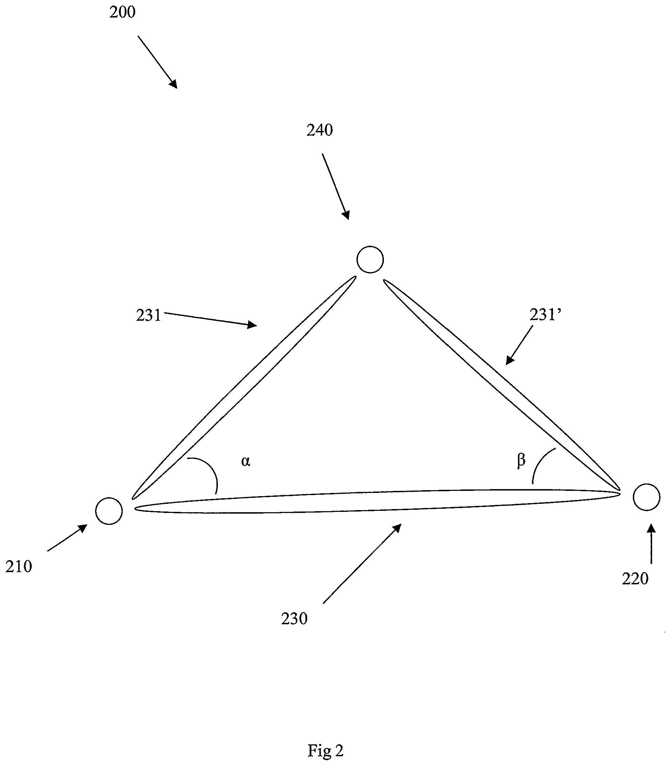

Although the beams are separated in azimuth, they will still be able to reach one and the same receiver in a point-to point system since the system comprises at least one repeater. An example of such a system 200 is shown in fig 2: The system 200 is a point-to-point telecommunications system which comprises a transmitter 210 which transmits information to a receiver 220 via electromagnetic waves.

The transmitter 210 transmits on a number of antenna beams, with the example in fig 2 showing two antenna beams 230, 231. One and the same transmit frequency is used by the transmitter 210 on the two transmit beams 230, 231, although the two beams contain different transmit information.

Usually, there will be one radio transmitter with an amplifier for each of the transmit frequencies.

The point-to-point connection between the transmitter and the receiver is achieved by means of at least a first repeater 240 located between the transmitter and the receiver, said first repeater being used for one of said beams, 231.

Thus, as shown in fig 2, one of the transmit beams 230 is used for direct communication between the transmitter 210 and the receiver 220, and the other transmit beam 231 is used for communication by means of the repeater 240. The repeater 240 can be a passive repeater or an active repeater, i.e. one which amplifies the signal before or while repeating it.

The two transmit beams 230,231, are separated in azimuth and/or elevation by an angle α which is sufficient to avoid interference between the two beams. The transmit beam which is reflected from the repeater 240 to the receiver 220, in fig 2 referred to as 231', is also separated from the first transmit beam 230 by an angle β which is also sufficient to avoid interference, and which is achieved by the position of the repeater 240.

Although the system 200 is described as comprising one transmitter 210 and one receiver 220, a system according to the invention may in fact be a "full duplex" system, i.e. each end of the connection 210-220 comprises both a transmitter and a receiver, so that the system comprises first and second transmitters and first and second receivers.

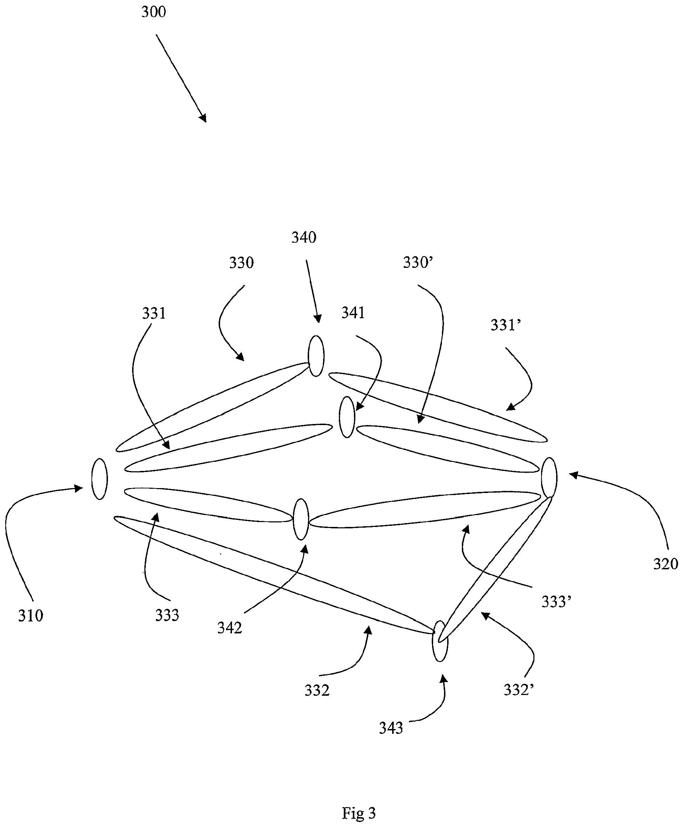

A version 300 of the invention is shown in fig 3. The system 300 uses the same basic principles as the system 200 in fig 2, but the transmitter 310 transmits on four different beams 330-333 at the same time, and each beam is relayed to the receiver 320 via a separate repeater 340-343. The beams are grouped two and two, 330, 331; 332,333, with each pair of beams being directed in a main direction, so that two main directions are shown in fig 3.

This is merely done in order to achieve the desired angular separation, for which other solutions can also be found, such as directing all four beams in one main direction with an angular separation between them. In fig 3, all reflected beams are denoted as 331', 332', etc.

As indicated previously, the repeaters 340-343 can be active or passive repeaters, or a combination of passive and active repeaters can be used within the group of repeaters 340-343.

In similarity with the system described in fig 2, the transmissions in each of the beams 330-333 can be on the same frequency in order to save spectrum.

Since four beams are used, the transmission capacity of the system 300 in one transmit direction will be 4* (155 Mb/second) on a 28MHz bandwidth, i.e. 620 Mb/second, without an increased need for bandwidth.

It can be mentioned here that in a system of the invention, e.g. that of fig 3, both ends of the connection can be equipped with both a transmitter and a receiver, so that a "full duplex" connection is obtained, i.e. a system which transmits in both directions. In such a system, the transmit and receive frequencies are suitably separated by a so called duplex distance, which ensures transmission where the interference is below a defined level.

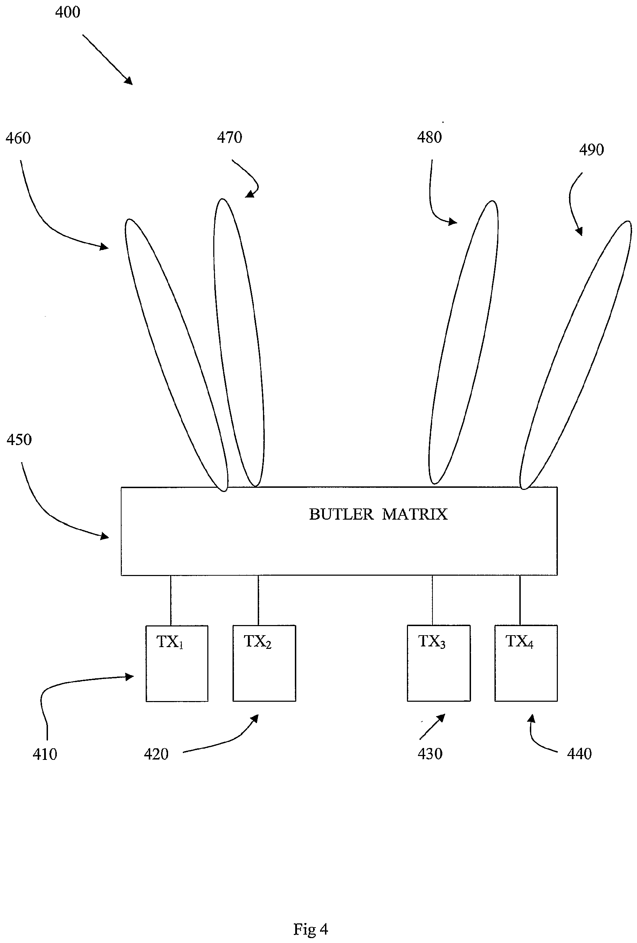

Fig 4 shows a transmit station 400 for use in a system of the invention: a Butler matrix 450 is used to generate the four beams shown in fig 3, four being only an example, the number of beams used can, more or less, be varied freely. However, other antenna designs can also be used, such as, for example, so called travelling wave antennas and antennas comprising separate radiation elements.

The input to the butler matrix 450 comes from four separate radio chains, one chain comprising one transmitter and one amplifier, 410, 420, 430, 440, each of which generates one modulated data stream. The Butler matrix 450 uses these inputs to generate the four beams 460, 470, 480, 490, each of which contains one of the modulated data streams from the radio transmitters 410 - 440. The four beams must, as indicated previously, be sufficiently decorrelated i.e. have a sufficiently low degree of interference between them. Said degree is decided by the application in question.

## Claims

1. A point-to-point telecommunications system (200, 300) comprising a first transmitter (210, 310), a receiver (220, 320) and a repeater (240, 340, 341, the transmitter (210, 310) adapted to transmit information to the receiver (220, 320) via electromagnetic waves, with said transmitter transmitting on a number of different antenna beams (230, 231; 330, 331, 332, 333) at the same time using a first frequency on at least a first and a second of said beams, said first and second beams containing different information, wherein the point-to-point connection between the transmitter and the receiver is achieved by means of at least one repeater (240, 340, 341, 342, 343) located between the transmitter and the receiver, with said repeater (240) being used for said first beam (231), **characterized in that** the beams are arranged with angular separation in either azimuth or elevation, or a combination of azimuth and elevation, whereby a desired level of interference between the beams is obtained, the second transmit beam (230) being used for direct communication between the transmitter (210, 310) and the receiver (220, 320), the first transmit beam (231, 331) being used for communication between the transmitter (210, 310) and the receiver (220, 320) via the repeater (240).

2. The system of claim 1, in which the electromagnetic waves are on the microwave band.

3. The system of claim 1, in which the electromagnetic waves are on the optical frequencies.

4. The system (200, 300) of any of claims 1-3, in which at least one of the repeaters (240; 340, 341, 342, 343) is an active repeater.

5. The system (200, 300) of any of claims 1-4, in which at least one of the repeaters (240; 340, 341, 342, 343) is a passive repeater.

## Patentansprüche

1. Punkt-zu-Punkt-Telekommunikationssystem (200, 300), umfassend einen ersten Sender (210, 310), einen Empfänger (220, 320) und einen Repeater (240, 340, 341, wobei der Sender (210, 310) ausgebildet ist, Informationen durch elektromagnetische Wellen zum Empfänger (220, 320) zu senden, wobei der Sender auf einer Anzahl verschiedener Antennenstrahlen (230, 231; 330, 331, 332, 333) gleichzeitig unter Verwendung einer ersten Frequenz auf mindestens einem ersten und einem zweiten der Strahlen sendet, wobei der erste und zweite Strahl unterschiedliche Informationen enthalten, wobei die Punkt-zu-Punkt-Verbindung zwischen dem Sender und dem Empfänger mit Hilfe zumindest eines Repeaters (240, 340, 341, 342, 343) erreicht wird, der zwischen dem Sender und dem Empfänger gelegen ist, wobei der Repeater (240) für den ersten Strahl (231) verwendet wird, **dadurch gekennzeichnet, dass** die Strahlen mit Winkeltrennung entweder im Azimut oder in der Elevation oder einer Kombination von Azimut und Elevation angeordnet sind, wodurch ein gewünschter Interferenzwert zwischen den Strahlen erhalten wird, der zweite Sendestrahl (230) für eine direkte Kommunikation zwischen dem Sender (210), 310) und dem Empfänger (220, 320) verwendet wird, der erste Sendestrahl (231, 331) zur Kommunikation zwischen dem Sender (210), 310) und dem Empfänger (220, 320) über den Repeater (240) verwendet wird.

2. System nach Anspruch 1, wobei die elektromagnetischen Wellen auf dem Mikrowellenband sind.

3. System nach Anspruch 1, wobei die elektromagnetischen Wellen auf den optischen Frequenzen sind.

4. System (200, 300) nach einem der Ansprüche 1-3, wobei zumindest einer der Repeater (240; 340, 341, 342, 343) ein aktiver Repeater ist.

5. System (200, 300) nach einem der Ansprüche 1-4, wobei zumindest einer der Repeater (240; 340, 341, 342, 343) ein passiver Repeater ist.

## Revendications

1. Système de télécommunications de point à point (200, 300) comprenant un premier émetteur (210, 310), un récepteur (220, 320) et un répéteur (240, 340, 341), l'émetteur (210, 310) étant apte à transmettre des informations au récepteur (220, 320) par l'intermédiaire d'ondes électromagnétiques, ledit émetteur transmettant sur un nombre de faisceaux d'antennes différents (230, 231 ; 330, 331, 332, 333) en même temps en utilisant une première fréquence sur au moins un premier et un deuxième desdits faisceaux, lesdits premier et deuxième faisceaux contenant des informations différentes, dans lequel la connexion de point à point entre l'émetteur et le récepteur est réalisée au moyen d'au moins un répéteur (240, 340, 341, 342, 343) situé entre l'émetteur et le récepteur, ledit répéteur (240) étant utilisé pour ledit premier faisceau (231), **caractérisé en ce que** les faisceaux sont agencés avec une séparation angulaire en azimut ou en élévation, ou une combinaison d'azimut et d'élévation, de telle manière qu'un niveau souhaité d'interférences entre les faisceaux soit obtenu, le deuxième faisceau de transmission (230) étant utilisé pour diriger une communication entre l'émetteur (210, 310) et le récepteur (220, 320), le premier faisceau de transmission (231, 331) étant utilisé pour une communication entre l'émetteur (210, 310) et le récepteur (220, 320) par l'intermédiaire du répéteur (240).

2. Système selon la revendication 1, dans lequel les ondes électromagnétiques sont dans la bande de micro-ondes.

3. Système selon la revendication 1, dans lequel les ondes électromagnétiques sont dans les fréquences optiques.

4. Système (200, 300) selon l'une quelconque des revendications 1 à 3, dans lequel au moins l'un des répéteurs (240 ; 340, 341, 342, 343) est un répéteur actif.

5. Système (200, 300) selon l'une quelconque des revendications 1 à 4, dans lequel au moins l'un des répéteurs (240 ; 340, 341, 342, 343) est un répéteur passif.
